# EUROPEAN PATENT APPLICATION

(11) **EP 1 502 501 A2**
(43) Date of publication of application: **02.02.2005**
(21) Application number: 04016587.0
(22) Date of filing: 14.07.2004
(51) Int. Cl.: A01K 23/00

(54) **Device for disposing feces of dog**

(30) Priority: 31.07.2003 JP 2003283616
(71) Applicant: Nakamura, Eizou, Mito-shi, Ibaraki (JP)
(72) Inventor: Nakamura, Eizou, Mito-shi, Ibaraki (JP)
(74) Representative: Grünecker, Kinkeldey, Stockmair & Schwanhäusser Anwaltssozietät

(57) **Abstract**

An object of the present invention is to provide a device for disposing feces of a dog, which enables convenient disposal of feces a dog.

The device for disposing feces of a dog comprises a bag body 2 having a feces-bag 22 receiving feces of a dog, and having a disk ring-like collar 21 around an opening 24 of the feces-bag 22; and a disk ring-like holder 1 placed and mounted around the anus of a dog, the holder 1 having a disk ring-like holding portion 12 for inserting and holding the collar 21 of the bag body 2 in a diametrical direction around a hole 11 of the holder 1, and the edge holding portion 12 is formed with an inserting portion 13 having partial opening in order to detachably insert the disk ring-like collar 21 of the bag body 2 from the opening, and an inner circumferential portion of the edge holding portion 12 of the holder 1 and an outer circumferential portion of the collar 21 of the bag body 2 having protuberance portions 14, 23 touched and engaged with each other in a diametrical direction when the collar 21 is inserted into the edge holding portion 12.

## Description

### BACKGROUND OF THE INVENTION

### Field of the Invention

The present invention relates to a device for disposing feces of a dog having a feces-bag which houses feces excreted from a dog without falling and capable of attaching and changing detachably to a holder attached to the buttocks portion of a dog, and particularly, to a device for disposing feces of a dog that can be miniaturized being inconspicuous and having little sense of incongruity, when it is attached to the buttocks portion of a dog.

### Description of Prior Art

In these days, it is an unprecedented pet boom that there are many houses which keep dogs, and some of them keep plural of dogs in one family. Taking a walk and disposing feces of a dog are necessary for the dog owner. Especially, dogs have the attribute of excreting during exercise such as a walk or the like, and it is necessary to dispose of feces excreted from dog during a walk.

Public roads, parks, or the like are well used for the walk of a dog. Under such present condition, the parks which have forbidden pet animals from entering are increasing in recent years. The reason is because the owners do not dispose of feces that other park users frequently complain about it, and as a result, pet animals are forbidden to enter the parks.

The rule of disposing feces of a dog is to bring collected feces to home, flush it at a toilet, and dispose of the bags or the like used for collecting feces as rubbish. Because the thoughtless owners don't observe the rules of such disposal and they leave feces in public space, the damages caused by feces also become an issue of public concern.

The largest cause for the slovenly disposal of feces of a dog in a public space is an inconvenience of disposal. When taking a dog for a walk, it takes some inconvenience to take a plastic bag, a paper bag, or the like for disposing feces of a dog and collect feces excreted from dog into it. Further, after collecting feces, you have to walk around with the bag or the like with collected feces in it. Besides, defecation of a dog is not necessarily limited to one time and you must collect the feces of a dog into the other bag every time a dog defecates. The thoughtless owners leave feces of a dog in public space to avoid trouble, and cause trouble to others.

Accordingly, in order to make disposal of feces convenient, the device for disposing feces of a dog which mounts a bag to the lower edge of a stick and a fastening device to pick up feces of a dog and put feces of a dog into the bag by a fastening device has been proposed heretofore. Further, the device or the like which attach a feces picking device at the waist or buttocks portion of a dog so as to collect feces from anus of dog directly into the feces-bag have been also proposed.

However, in every case, it is troublesome to use and also inconvenient to carry or dogs have sense of incongruity by attaching it. Therefore, there is a problem that it is hard to collect feces effectively.
[Patent Reference 1] Japanese Patent Application Laid-Open No. Hei 10 (1998) - 66470
[Patent Reference 2] Japanese Patent Application Laid-Open No. Hei 10 (1998) - 75678
[Patent Reference 3] Japanese Patent Application Laid-Open No. Hei 10 (1998) - 191823
[Patent Reference 4] Japanese Patent Application Laid-Open No. 2002 - 142594
[Patent Reference 5] Japanese Utility Model Registration No. 3021428

### SUMMARY OF THE INVENTION

First, it is a matter of morals of thoughtless owners that there is no end to the trouble or damage by the feces of a dog in a public place. However, if a device which is convenient to collect the feces of a dog spread, it is considered that some can help the dissolution of the problems.

It is an object of the present invention to provide the device for disposing feces of dog which can dispose feces of dog easily in view of subject relating to disposing feces of dog.

For achieving the aforementioned object, a device for disposing feces of dog according to the present invention comprises a holder 1 that can be mounted around the anus of a dog, and a bag body 2 provided with a feces-bag 22 that can be detachably mounted on the holder 1 and that can encase feces excreted from a dog. Therefore, the bag body 2 is provided with a disk ring-like collar 21 holding the peripheral portion of an opening of the feces-bag 22, and the holder 1 is provided with an edge holding portion 12 capable of detachably mounting the collar 21 of the bag body 2. The edge holding portion 12 of the holder 1 and the collar 21 of the bag body 2 are provided with protuberance portions 14 and 23 engaged with each other in a diametrical direction when the collar 21 of the bag body 2 is mounted on the edge holding portion 12 of the holder 1 so that the bag body 2 is hard to be disengaged from the holder 1.

In other words, the device for disposing feces of a dog according to the present invention comprises the bag body 2 having the feces-bag 22 receiving feces of a dog, and having the disk ring-like collar 21 around an opening 24 of the feces-bag 22, the disk ring-like holder 1 placed and mounted around the anus of a dog and having the disk ring-like edge holding portion 12 for inserting and holding the collar 21 of the bag body 2 in a diametrical direction around a hole 11 of the holder 1, the edge holding portion 12 being formed with an inserting portion 13 having partial opening in order to detachably insert the disk ring-like collar 21 of the bag body 2 from the opening, and an inner circumferential portion of the edge holding portion 12 of the holder 1 and an outer circumferential portion of the collar 21 of the bag body 2 having protuberance portions 14, 23 touched and engaged with each other in a diametrical direction when the collar 21 is inserted into the edge holding portion 12.

In the device for disposing feces of a dog as described above, the disk ring-like collar 21 of the bag body 2 is inserted from the inserting portion 13 into the edge holding portion 12 of the holder 1 placed and mounted around the anus of a dog, and it is pulled out reversely whereby the bag body 2 having the feces-bag 22 is detachably mounted on the holder 1. Because of this feature, only the bag body 2 having feces received when a dog evacuated can be easily collected by removing it from the holder 1.

Further, the inner circumferential portion of the edge holding portion 12 of the holder 1 and the outer circumferential portion of the collar 21 of the bag body 2 have the protuberance portions 14, 23 touched and engaged with each other in a diametrical direction when the collar 21 is inserted into the edge holding portion 12. Therefore, the bag body 2 does not simply disengaged due to the weight of feces when a dog has evacuated.

In the device for disposing feces of a dog as described above, when a cover 3 provided so that the holder 1 covers the feces-bag 22 of the bag body 2 having the collar 21 mounted on the edge holding member 12 is provided to the holder 1, the feces-bag 22 cannot be seen from outside. Further, when the holder 1 has a notch 15 cut in a diametrical direction in order to allow deformation of the holder 1, the holder 1 deforms freely to a certain degree around the anus of a dog, and the sense of incongruity when a dog wears it can be made small. Further, when the collar 21 of the bag body 2 has a notch 25, the notch 25 of the collar 21 holds and closes the place near the base portion of the bag body 2 to recover the bag body 2 after evacuation. Therefore, the bag body 2 having feces received can be collected easily. And if the notch 25 is pulled out of the feces-bag 22, the feces-bag 22 is easily opened, and therefore the feces received in the feces-bag 22 can be easily abandoned.

As described above, the device for disposing feces of a dog according to the present invention can be mounted on the buttocks portion of a dog without the sense of incongruity, and the bag body 2 having the feces-bag 22 receiving feces of a dog can be detachably mounted on the holder 1. Therefore, the recovery of feces after evacuation of a dog and the mounting of a new bag body 2 can be carried out easily. Moreover, the bag body 2 does not disengage easily due to the weight of feces when a dog has evacuated.

### BRIEF DESCRIPTION OF THE DRAWINGS

FIG. 1 shows an embodiment of device for disposing feces of a dog according to the present invention, which is a perspective view showing each element separately and reversed vertically.
FIG. 2 is a bottom plan view showing the state where each element of the device for disposing feces of the embodiment are assembled.
FIG. 3 is a sectional view taken on line A-A of FIG. 2.
FIG. 4 is an enlarged sectional view of part B in FIG. 3.
FIG. 5 is a side view showing the state where elements of the device for disposing feces of the embodiment are assembled, and the cover is folded up.
FIG. 6 is a schematic diagram of the state where the device for disposing feces is attached to the dog of the embodiment.

### DESCRIPTION OF THE PREFERRED EMBODIMENTS

According to the present invention, a holder 1 that can be mounted around anus of a dog without the sense of incongruity and a bag body 2 provided with a feces-bag 22 capable of receiving feces evacuated by a dog constitute a device for disposing feces of a dog, and when a dog has evacuated, only the bag body 2 of which feces of a dog is received can be collected. Moreover, protuberances 14, 23 engage with each other in a diametrical direction, when a collar 21 of the bag body 2 is mounted on an edge holding portion 12 of the holder 1, are provided, whereby the bag body 2 does not disengage easily from the holder 1 due to the weight of feces of a dog or the like.

The embodiments of the present invention as described above will be described hereinafter by way of specific examples with reference to the accompanying drawings.

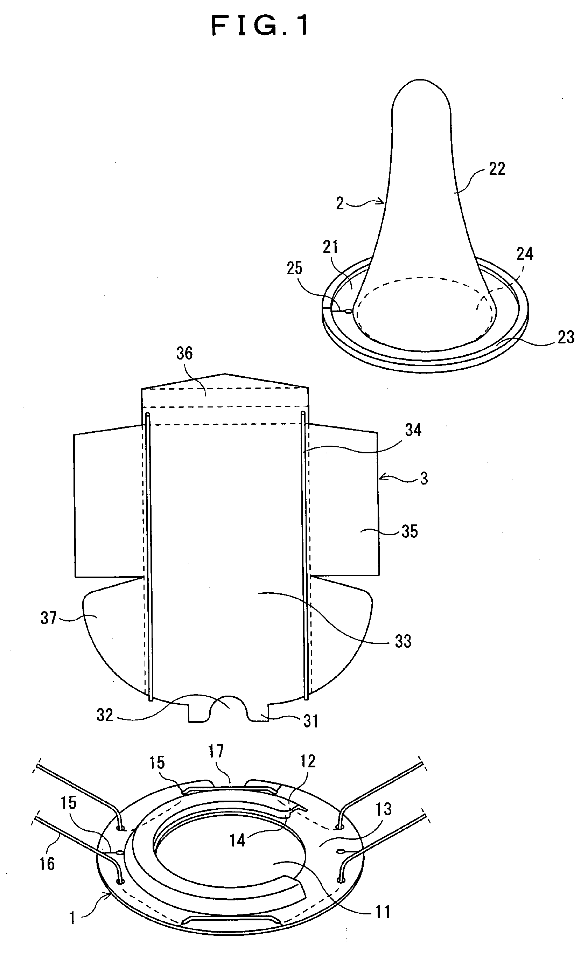

FIG. 1 shows one embodiment of the device for disposing feces of a dog according to the present invention, where each element are separated, and reversed vertically. As shown in FIG. 1, the device for disposing feces of a dog comprises the holder 1, the bag body 2 and the cover 3.

The holder 1 has a circular opening 11 in the center thereof, which is basically in the shape of a disk ring. The holder 1 is integrally provided with the edge holding portion 12 so as to be protruded from the central portion to the circumference of the opening 11. Part of the whole circumference of the edge holding portion 12 is opened as an inserting portion 13, and the collar 21 of the bag portion 2 described later is slidably moved from the inserting portion 13 in a diametrical direction of the edge holding portion 12 whereby the collar 21 of the bag body 2 can be inserted into and mounted on the edge holding portion 12. In the inner circumference of the edge holding portion 12, the protuberance 14 protruded toward the edge of the opening 11 of the holder 1 is provided.

Two string-like mounting bands 16 are extended from opposed both sides of the holder 1. In the illustrated embodiment, the two string-like mounting bands 16 are mounted so as to run through the small hole provided in the holder 1.

Further, a plurality of notches 15 are provided radially in the outer circumferential portion of the holder 1, and in the illustrated embodiment, six notches are provided basically in the spacing at equal angles. The base portion of the notch 15 is formed to be a small circular hole to prevent rupture, and the extreme end of the base portion of the notch 15 reaches the outer circumference of the holder 1.

The holder 1 is provided with a recess portion 17 at a position 90° away from a point where two mounting bands 16 are extended. The recess portion 17 is a portion for avoiding a tail of a dog when the holder 1 is mounted around the anus of a dog, as will be described later.

The holder 1 is formed of a resin material which has flexibility and a water-shedding quality. It is preferable that the whole holder 1 including the edge holding portion 12 is molded integrally.

In the bag body 2, the circumference of an opening 24 of the feces-bag 22, which is a bag having one end closed, is secured to the inner circumference of the disk ring-like collar 21.

The collar 21 is formed of a resin material which has flexibility and a water-shedding quality, and part of which is provided with a notch 25 in a diametrical direction. The base portion of the notch 25 is a small circular hole to prevent rupture, and the extreme end of the base portion of the notch 25 reaches the outer circumference of the collar 21. Further, the protuberance 23 protruded toward the feces-bag 22 is formed on the outer circumference of the collar 21 of the bag body 2. The external diameter of the collar 21 is smaller than the internal diameter of the edge holding portion 12 of the holder 1.

The feces-bag 22 may be integral with the collar 21, or adhered or fused to the collar 21 and preferably deformable and durable. For example, resin, rubber or the like may be used.

The cover 3 is prepared from a resin sheet, a water resistant paper sheet or the like which is steady to a certain degree. The cover 3 is mounted on both sides of the recess portion 17 of the holder 1 in a mounting portion 31 provided at one end of the cover 3. Therefore, the mounting portion 31 at one end of the cover 3 is also provided with a recess portion 32, and the recess portion 32 is mounted in the state positioned to the recess portion 17.

A central portion 33 extended from the mounting portion 31 of the cover 3 is band-like, and a flap-like side cover 37 and a folding piece 35 are extended integrally on both sides of the central portion 33. The side cover 37 is located at the side close to the mounting portion 31, and the folding piece 35 is located on the extreme end side away from the mounting portion 31. A boundary line between side cover 37 and the central portion 33 and a boundary line between the folding piece 35 and the central portion 33 are folding lines. These folding lines enable the side cover 37 and the folding piece 35 to bend at inside direction in FIG. 1. The side cover 37 has a circular arc edge, and the folding piece 35 is trapezoidal.

A straightening string 34 having elasticity such as a rubber string is fixed along the folding line between the side cover 37 and the central portion 33 and the folding line between the folding piece 35 and the central portion 33.

Further, the extreme end of the central portion 33 of the cover 3 is a bending piece 36, but the folding piece 35 or the straightening string 34 are not provided on both sides of the bending piece 36. The bending piece 36 has three parallel bending lines widthwise, and the folding piece 36 can be bent at inside direction in FIG. 1 and folded up with these bending lines.

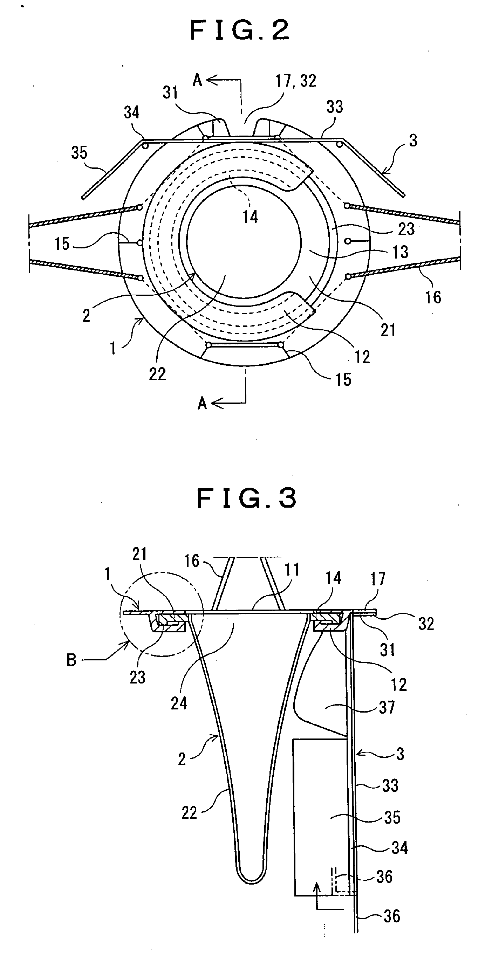

FIGS. 2 to 4 show the state that the cover 3 is mounted on the holder 1, and the bag body 2 is mounted on the holder 1.

As mentioned previously, the cover 3 is mounted on both sides of the recess portion 17 of the holder 1 in the mounting portion 31 provided at one end of the cover 3. Further, in the bag body 2, the collar 21 is slidably moved in a diametrical direction from the inserting portion 13 of the edge holding portion 12 of the holder 1 whereby the collar 21 is inserted into the edge holding portion 12 and mounted. Reversely, the collar 21 of the bag body 2 is slidably moved in a diametrical direction from the inserting portion 13 of the edge holding portion 12 of the holder 1 and pulled out, whereby the bag body 2 can be removed from the holder 1.

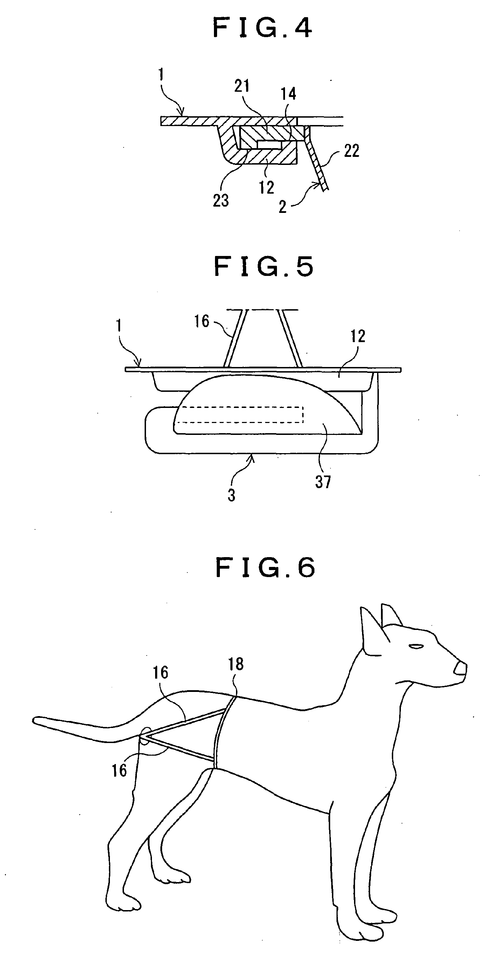

In the state that the bag body 2 is mounted on the holder 1 as described above, the opening 11 of the holder 1 and an opening 24 of the feces-bag 22 of the bag body 2 are superposed to each other, as shown in FIG. 3. Further, as shown in FIG. 4, the protuberance 14 provided on the inner circumference of the edge holding portion 12 of the holder 1 and the protuberance 23 provided on the outer circumference of the collar 21 of the bag body 2 are engaged with each other to function as an anti-disengagement.

When the feces-bag 22 of the bag body 2 is put on the central portion 33 of the cover 3, and the folding pieces 35 on both sides of the cover 3 are folded on the central portion 33 side from the folding line, from the state shown in FIGS. 2 and 3, the extreme end of the feces-bag 22 is covered by the cover 3. In this state, the cover 3 is bended from the side of bending piece 36 provided at the extreme end of the central portion 33, and the cover 3 is folded toward the holder 1. Further, the side cover 37 is bended from the bending line and stood upright at an angle of 90° from the central portion 33. In this state, as shown in FIG. 5, the whole body is folded compact, the feces-bag 22 is covered by the cover 3, and both sides of the feces-bag 22 is covered by a side flap 37 of the cover 3.

FIG. 6 shows the state that the device for disposing feces is mounted on a dog. The holder 1 is mounted on the buttocks of a dog using the mounting bands 16 and an assistant band 18 so that the opening 11 of the holder 1 is adjusted to the anus of a dog. In this state, the holder 1 is closely placed around the anus of a dog without the sense of incongruity because a plurality of notches 15 is provided radially in the holder 1. In case where a tail of a dog is close to the anus, the tail is passed through the recess portion 17 of the holder 1.

When a dog evacuates in this state, feces of a dog enters the feces-bag 22 of the bag body 2, and the feces-bag 22 lengthens due to the weight of feces and the cover 3 opens. Thereby, evacuation of a dog can be recognized. At this time, the protuberance 14 provided on the inner circumference of the edge holding portion 12 of the holder 1 and the protuberance 23 provided on the outer circumference of the collar 21 of the bag body 2 are engaged with each other to function as anti-disengagement as mentioned previously. Therefore, the bag body 2 does not disengage easily from the holder 1.

After feces of a dog has entered the feces-bag 22, the collar 21 of the bag body 2 is slidably moved in a diametrical direction from the inserting portion 13 of the edge holding portion 12 of the holder 1 to remove the bag body 2 from the holder 1, in the manner as mentioned above. Thereafter, the collar 21 of the bag body 2 is bended, and the notches 25 are opened to hold the place near the opening 24 of the feces-bag 22, and the feces-bag 22 is closed.

Thereafter, the collar 21 of a new bag body 2 is slidably moved in a diametrical direction from the inserting portion 13 of the edge holding portion 12 of the holder 1, whereby the collar 21 is inserted into the edge holding portion 12 of the holder 1, and the new bag body 2 is mounted on the holder.

The bag body 2 having feces received therein can be put in a separate bag to take home, and the notches 25 are removed from the feces-bag 22 to open the opening 24 of the feces-bag 22 to dispose it into a stool or the like.

## Claims

1. A device for disposing feces of a dog having a bag mounted on the buttocks of a dog to receive feces evacuated from the anus comprising:
a bag body (2) having a feces-bag (22) receiving feces of a dog, and having a disk ring-like collar (21) around an opening (24) of said feces-bag (22),
a disk ring-like holder (1) placed and mounted around the anus of a dog and having a disk ring-like holding portion (12) for inserting and holding in a diametrical direction said collar (21) of said bag body (2) around a hole (11) of said holder (1) where said edge holding portion (12) is formed with an inserting portion (13) having partial opening to detachably insert said disk ring-like collar (21) of said bag body (2) from said opening, and
an inner circumferential portion of the edge holding portion (12) of said holder (1) and an outer circumferential portion of said collar (21) of said bag body (2) having protuberance portions (14), (23) touched and engaged with each other in a diametrical direction when said collar (21) is inserted into said edge holding portion (12).

2. The device for disposing feces of a dog according to claim 1, wherein a cover (3) is mounted on said holder (1) for covering said feces-bag (22) of said bag body (2) having said collar (21) mounted on said edge holding member (12).

3. The device for disposing feces of a dog according to claim 1 or 2, wherein said holder (1) has a notch (15) cut in a diametrical direction to allow deformation of said holder (1).

4. The device for disposing feces of a dog according to claim 1 or 2, wherein said collar (21) of said bag body (2) has a notch (25) for holding and closing the place near a base portion of said bag body (2).

5. The device for disposing feces of a dog according to claim 3, wherein said collar (21) of said bag body (2) has a notch (25) for holding and closing the place near a base portion of said bag body (2).
